# EUROPÄISCHE PATENTSCHRIFT

(11) **EP 1 811 268 B1**
(45) Veröffentlichungstag und Bekanntmachung des Hinweises auf die Patenterteilung: **19.01.2011**
(21) Anmeldenummer: 06124116.2
(22) Anmeldetag: 15.11.2006
(51) Int. Cl.: G01C 21/20, A01B 79/00

(54) **Routenplanungssystem zur Erzeugung von Referenzfahrspuren für landwirtschaftliche Arbeitsmaschinen**
Route planning system for generating reference tracks for agricultural working machines
Système de planification d'itinéraire destiné à la production de pistes de référence pour des machines agricoles

(30) Priorität: 18.01.2006 DE 102006002567
(43) Veröffentlichungstag der Anmeldung: 25.07.2007
(73) Patentinhaber: CLAAS Selbstfahrende Erntemaschinen GmbH, 33428 Harsewinkel (DE)
(72) Erfinder: Diekhans, Dr. Norbert, 33335, Gütersloh (DE); Brunnert, Andreas, 33397, Rietberg (DE); Meyer zu Helligen, Lars Peter, 32139, Spenge (DE); Beermann, Ingo, 48291, Telgte (DE)

(56) Entgegenhaltungen:
- EP-A2- 0 821 296
- US-A- 5 438 817

## Beschreibung

Die Erfindung betrifft ein Routenplanungssystem für landwirtschaftliche Arbeitsmaschinen nach dem Oberbegriff des Anspruchs 1.

Aus dem Stand der Technik sind eine Vielzahl von gattungsgemäßen Routenplanungssystemen bekannt, die neben der Aufzeichnung von Fahrtrouten eines über ein zu bearbeitendes Territorium bewegten Fahrzeuges auch das automatische Abarbeiten zuvor programmierter Fahrtrouten durch das besagte Fahrzeug umfassen. Beispielsweise beschreibt die DE 43 42 171 für einen Bodenbearbeitungsprozess unter Zuhilfenahme GPS-basierter Positionsdaten die Aufzeichnung von Wegstrecken, die die Bodenbearbeitungsmaschine auf einem zu bearbeitenden Territorium zurückgelegt hat. Die so ermittelten Fahrstreckendaten der landwirtschaftlichen Arbeitsmaschine werden dann je nach Ausgestaltung der Datenverarbeitungseinrichtung auf der jeweiligen landwirtschaftlichen Arbeitsmaschine oder in einer zentralen Recheneinheit in Fahrtroutendaten umgewandelt, die dann sowohl online angezeigt werden können als auch wiederabrufbar abspeichbar sind. Derartige Systeme haben vor allem den Nachteil, dass das Fahrzeug zunächst eine bestimmte Fahrtroute abarbeiten muss, bevor diese wiederabrufbar in der Speichereinheit vorliegt und gegebenenfalls als Basisdatensatz zur Generierung von zukünftig abzuarbeitenden Fahrtrouten verfügbar ist.

Ein heute typischerweise eingesetztes Verfahren einer Routenplanung im Zusammenhang mit sogenannten automatischen Spurführungssystemen ist unter anderem in der US 6,236,924 offenbart. Indem softwareunterstützt zunächst ein zu bearbeitendes Territorium über markante Referenzpunkte ausgewählt wird und sodann dieses selektierte Territorium in definierte Fahrtrouten unter verschiedenen Optimierungskriterien aufgeteilt wird, kann dem Fahrzeug ein vordefinierter Routenplan übergeben werden nach dem das Fahrzeug automatisch über das zu bearbeitende Territorium geführt wird. Auch derartigen Systemen haftet der Nachteil an, dass zunächst für das zu selektierende Territorium markante Referenzpunkte bestimmt werden müssen und hierfür entweder auf früher bereits erstellte Daten zurückgegriffen werden muss oder das jeweilige Fahrzeug zunächst eine erste Umfahrung des zu selektierenden Territoriums ausführen muss. Während man bei dem Rückgriff auf bereits früher erstellte Daten auf deren Informationsgehalt beschränkt ist führt das unmittelbare Abfahren des zu bearbeitenden Territoriums durch das jeweilige Fahrzeug zu einem erheblichen Vorbereitungsaufwand für die Umsetzung einer Routenplanung.

Aus der US 5,438,817 ist ein Routenplanungssystem für landwirtschaftliche Arbeitsmaschinen mit definierter Arbeitsbreite zur Generierung von Fahrtrouten in einem Territorium bekannt. Dieses System weist dabei einen Automatikfahrmodus zum automatischen Abfahren der generierten Fahrtroute durch die landwirtschaftliche Arbeitsmaschine auf, sowie einen Aufzeichnungsmodus zum Aufzeichnen einer Fahrstrecke der landwirtschaftlichen Arbeitsmaschine. Es entspricht im Wesentlichen dem Verfahren gemäß der US 6,236,924 und ist mit den gleichen Nachteilen behaftet.

Es ist deshalb Aufgabe der Erfindung die beschriebenen Nachteile des Standes der Technik zu vermeiden und ein Routenplanungssystem vorzuschlagen, welches schnell und hochpräzise Fahrtrouten einem zu bearbeitendes Territorium zuordnen kann, sodass sich der Aufwand für die Erstellung dieser Fahrtrouten erheblich reduziert.

Diese Aufgabe wird erfindungsgemäß durch die kennzeichnenden Merkmale des Anspruchs 1 gelöst.

Indem das Routenplanungssystem ein Navigationsmodul beinhaltet, welches ein oder mehrere Automatikfahrmodi und zumindest einen Aufzeichnungsmodus umfasst und der oder die Automatikfahrmodi und der zumindest eine Aufzeichnungsmodus unabhängig voneinander aktivierbar sind, wird sichergestellt, dass die landwirtschaftliche Arbeitsmaschine im Automatikfahrmodus betrieben werden kann und zugleich die Aufzeichnung einer Referenzlinie für einen zukünftig abzuarbeitenden Automatikmodus aufgezeichnet wird. Damit wird zeitgleich eine bereits existierende Fahrtroute abgearbeitet und eine neue, zukünftig benötigte Fahrtroute erstellt, sodass sich der Aufwand für die Erstellung von Fahrtrouten eines Routenplanungssystems erheblich reduziert.

In vorteilhafter Ausgestaltung der Erfindung wird in einem Automatikfahrmodus die Aufzeichnung einer definierten Fahrstrecke vorgenommen, die zugleich die Referenzlinie einer oder mehrerer nachfolgend abzuarbeitenden Fahrstrecken bildet. Dies hat insbesondere den Vorteil, dass die Routenplanung auf Basis sehr präziser Daten des zu bearbeitenden Territoriums vorgenommen wird und die Generierung dieser präzisen sogenannten Online-Daten keine unproduktiven Hilfsfahrten zur Definition benötigter Referenzpunkte des zu bearbeitenden Territoriums erfordern.

In einer weiteren vorteilhaften Ausgestaltung der Erfindung werden die von der Referenzlinie definierten, nachfolgend abzuarbeitenden Fahrstrecken in einem Beetfunktionsmodul als Beetfunktion zusammengefasst. Damit wird gewährleistet, dass die Aufteilung des nachfolgend zu bearbeitenden Territoriums oder eines Ausschnitts dieses Territoriums mit definierten Fahrtrouten bereits vollständig abgeschlossen sein kann, bevor die Bearbeitung des momentan von dem Fahrzeug bearbeiteten Territoriums abgeschlossen ist.

Eine vorteilhafte Weiterbildung der Erfindung ergibt sich dann, wenn die definierte Fahrstrecke durch Selektion eines die definierte Fahrstrecke begrenzenden Anfangspunktes und Endpunktes erfolgt Auf diese Weise kann der Betreiber des Fahrzeugs ohne große Mühe die Gestalt der neuen Referenzlinie definieren. In einer sehr einfachen Ausgestaltung wird dies dadurch erreicht, dass der Anfangspunkt und der Endpunkt durch Generierung eines Start- und Stoppsignals in einer Aufzeichnungseinheit selektiert werden. Eine noch einfachere Handhabung ergibt sich dann, wenn in vorteilhafter Ausgestaltung der Erfindung die Steuer- und Auswerteinheit eine als Touchscreenmonitor ausgebildete Anzeigeeinheit umfasst und dass der Anfangspunkt und der Endpunkt durch Selektion auf dem Touchscreenmonitor bestimmt werden, Auf diese Weise ist der Betreiber auch in der Wahl einer geeigneten Referenzlinie völlig frei, da auf dem Bildschirm ein beliebiger Streckenabschnitt als neue Referenzlinie definiert werden kann.

In vorteilhafter Ausgestaltung der Erfindung umfasst die Beetfunktion die Aufteilung eines zu bearbeitenden Territoriums in eine Vielzahl von Fahrstrecken, sodass in einem einzigen Schritt ein beliebig großes, zu bearbeitendes Territorium in Fahrstrecken unterteilt werden kann.

Ein besonders flexibler Einsatz des erfindungsgemäßen Routenplanungssystems ergibt sich dann, wenn die Automatikfahrmodi das Abfahren einer von einem Anfangspunkt und einem Endpunkt begrenzten geraden Strecke, das Abfahren einer von einem Anfangspunkt und einem Endpunkt begrenzten Konturstrecke und das Konturfahren ohne Begrenzung durch einen Anfangspunkt und einen Endpunkt oder eine Kombination aus zumindest diesen Automatikfahrmodi umfassen. Diese Flexibilität des Routenplanungssystems wird auch dadurch noch erhöht, wenn der jeweilige Automatikfahrmodus frei wählbar ist und zwischen verschiedenen Automatikfahrmodi umgeschaltet werden kann.

Eine weitere vorteilhafte Ausgestaltung der Erfindung ergibt sich dann, wenn in dem einen Automatikfahrmodus die Aufzeichnung einer definierten Fahrstrecke erfolgt und diese definierte Fahrstrecke die Referenzlinie für die Beetfunktion eines anderen Automatikfahrmodus bildet. Dies hat insbesondere den Vorteil, dass in jedem beliebigen Automatikfahrmodus eine Referenzlinie beliebigster Struktur generiert werden kann, sodass die Methode zur Generierung der Referenzlinie sehr flexibel einsetzbar ist.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Fig. 1: die Draufsicht auf eine landwirtschaftliche Arbeitsmaschine mit Detailansicht der erfindungsgemäßen Steuer- und Auswerteinheit
- Fig. 2: eine schematische Darstellung des erfindungsgemäßen Routenplanungssys- tems
- Fig. 3: eine schematische Darstellung der Steuer- und Auswerteinheit mit erfindungs- gemäßem Programmiermodul

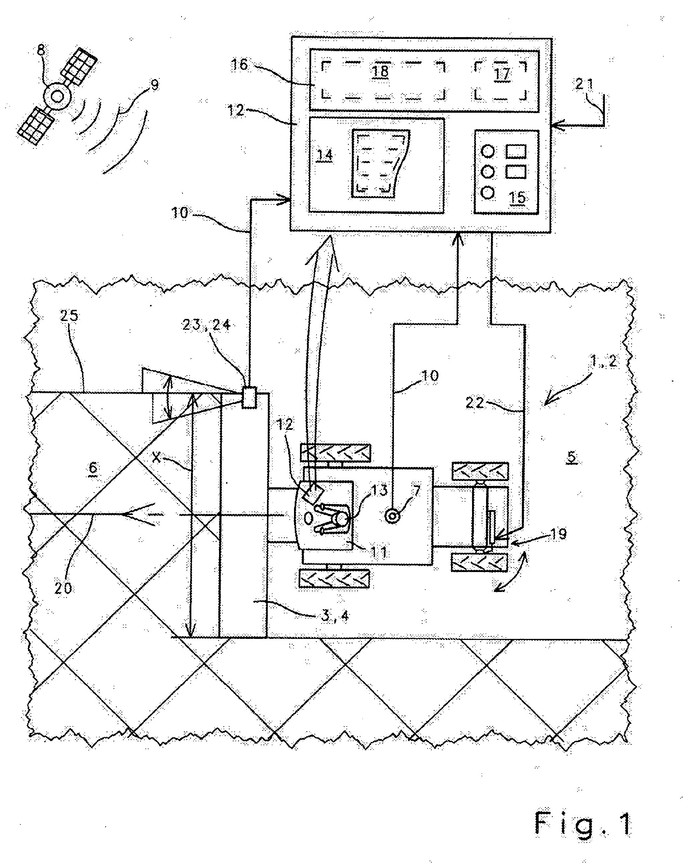

Fig. 1 zeigt eine als Mähdrescher 2 ausgeführte landwirtschaftliche Arbeitsmaschine 1 der in ihrem frontseitigen Bereich ein als Getreideschneidwerk 3 ausgebildetes Vorsatzgerät 4 zum Abernten eines in einem zu bearbeitenden Territorium 5 gewachsenen Bestandes 6 zugeordnet ist. Der Mähdrescher 2 verfügt über eine an sich bekannte GPS-Ortungsvorrichtung 7, die von sogenannten GPS-Satelliten 8 generierte Positionssignale 9 empfängt und aus diesen Positionssignalen 10 des Mähdreschers 2 generiert. Im Bereich der Fahrerkabine 11 des Mähdreschers 2 ist zudem wenigstens eine Steuer- und Auswerteinheit 12 im Wirkbereich des Betreibers 13 angeordnet, die gemäß ihrer schematischen Vergrößerung in Fig. 1 zumindest eine Anzeigeeinheit 14, eine Eingabeeinheit 15 und einen Programmiermodul 16 umfasst. In dem Programmiermodul 16 sind das noch näher zu beschreibende erfindungsgemäße Routenplanungssystem 17 und der Navigationsmodul 18 angelegt Zudem verfügt der Mähdrescher 2 über ein Lenksystem 19 welches automatisch angesteuert werden kann, sodass sich der Mähdrescher 2 in dem zu bearbeitenden Territorium 5 automatisch auf vordefinierten Fahrtrouten 20 bewegen kann. Diese automatische Führung der landwirtschaftlichen Arbeitsmaschine kann im einfachsten Fall dadurch bewirkt werden, dass in der Steuer- und Auswerteinheit 12 die abzuarbeitenden Fahrtrouten 20 hinterlegt sind, wobei deren Generierung entweder extern oder in der Steuer- und Auswerteinheit 12 selbst erfolgt, Bei externer Generierung werden die externen Fahrtroutensignale 21 dann üblicherweise durch Datenfemübertragung an die Steuer- und Auswerteinheit 12 übergeben. Unter Berücksichtigung der von der GPS-Ortungsvorrichtung 7 generierten Positionssignale 10 des Mähdreschers 2 werden dann in der Steuer- und Auswerteinheit 12 sogenannte Lenksignale 22 generiert und an das Lenksystem 19 übermittelt, sodass die landwirtschaftliche Arbeitsmaschine 1 automatisch auf einer definierten Fahrtroute 20 in dem zu bearbeitenden Territorium 5 geführt werden kann, Es liegt im Rahmen der Erfindung, dass die Positionssignale 10 der landwirtschaftlichen Arbeitsmaschine 1 in dem zu bearbeitenden Territorium 5 auch von optoelektronischen Ortungsvorrichtungen 23, wie etwa einem eine Bestandskante 25 detektierenden Laserscanner 24 generiert werden können.

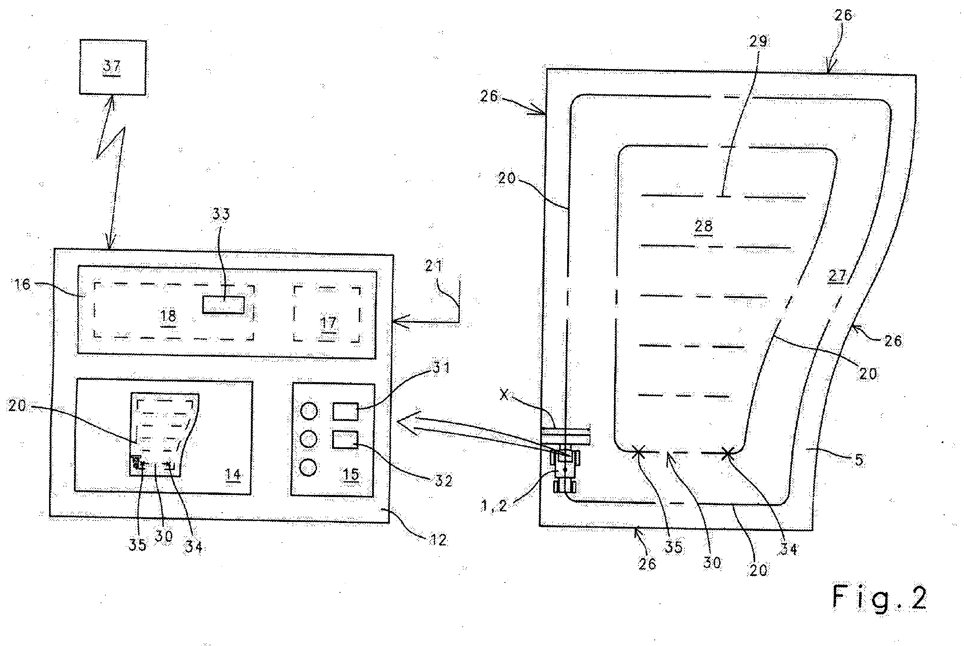

Gemäß Figur 2 kann das zu bearbeitende Territorium 5 beliebige Außenkonturen 26 aufweisen, wobei die von der landwirtschaftlichen Arbeitsmaschine 1 abzufahrenden Fahrtrouten 20 in Abhängigkeit von der Arbeitsbreite X der landwirtschaftlichen Arbeitsmaschine 1 so gewählt werden sollten, dass benachbarte Fahrtrouten 20 nahezu einen Abstand zueinander aufweisen, der der Arbeitsbreite X der landwirtschaftlichen Arbeitsmaschine 1 entspricht, Die in Figur 2 strichpunktiert dargestellte
äußerste Fahrtroute 20 muss entweder durch einmaliges Umfahren des zu bearbeitenden Territoriums 5 zunächst ermittelt werden oder kann, sofern früher schon einmal abgefahren und erstellt, via der externen Fahrtroutensignale 21 an die Steuerund Auswerteinheit 12 des Mähdreschers 2 unmittelbar übergeben werden. Je nach Beschaffenheit des zu bearbeitenden Territoriums 5 und der Größe der landwirtschaftlichen Arbeitsmaschine 1 kann es erforderlich sein, dass die landwirtschaftliche Arbeitsmaschine 1 mehrere die Außenkontur 26 des zu bearbeitenden Territoriums 5 nachbildende Fahrtrouten 20 abarbeitet. In diesem Fall können zumindest die innen liegenden Fahrtrouten 20 automatisch abgearbeitet werden. In Abhängigkeit von der Außenkontur 26 des zu bearbeitenden Territoriums 5 können sich, wie bereits aus Figur 2 ersichtlich ist, ganz unterschiedliche Fahrspurgeometrien und Fahrspuranordnungen ergeben. Hier setzt nun die Erfindung an. Eine optimale Anordnung der Fahrspuren in einem zu bearbeitenden Territorium 5 kann beispielsweise so strukturiert sein, dass nach einer oder mehreren die Außenkontur 26 des zu bearbeitenden Territoriums 5 nachbildenden im sogenannten Vorgewende 27 angeordneten Fahrtrouten 20 das verbleibende Restterritorium 28 durch anders verlaufende Fahrspuren 29 effizienter überfahr- und bearbeitbar ist, Zur Generierung dieser Fahrtrouten 29 bedarf es zunächst einer sogenannten Referenzlinie 30, die die Orientierung der neu zu generierenden Fahrtrouten 29 in dem zu bearbeitenden Territorium 5 definiert. In erfindungsgemäßer Weise wird diese Referenzlinie 30 dadurch generiert, dass während die landwirtschaftliche Arbeitsmaschine 1 automatisch entlang einer äußeren, die Außenkontur 26 des zu bearbeitenden Territoriums 5 nachbildenden Fahrtroute 20 geführt wird, der Betreiber 13 der landwirtschaftlichen Arbeitsmaschine 1 durch Betätigung einer Starttaste 31 sowie einer Stopptaste 32 einen dem Navigationsmodul 18 zugeordneten Aufzeichnungsmodus 33 aktivieren und wieder stoppen kann. Während der Aktivierung des Aufzeichnungsmodus 33 wird die Kontur der in dieser Zeitspanne von der landwirtschaftlichen Arbeitsmaschine 1 zurückgelegten Fahrtroute 20 als neue Referenzlinie 30 aufgezeichnet und in dem Programmiermodul 16 hinterlegt, Die Betätigung der Starttaste 31 sowie der Stopptaste 32 führt zugleich zur Generierung sogenannter Anfangspunkte 34 und Endpunkte 35, die zumindest abgespeichert werden und in einer vorteilhaften Ausgestaltung der Erfindung auch in der Anzeigeneinheit 14 visualisierbar sind. In diesem Zusammenhang ist es auch denkbar, dass die Anzeigeeinheit 14 einen sogenannten Touchscreen-Monitor 36 umfasst auf dem der Betreiber 13 in der abgebildeten Fahrtroute 20 unmittelbar den Anfangspunkt 34 und den Endpunkt 35 der zu generierenden Referenzlinie 30 selektieren kann, ohne Betätigungstasten 31, 32 aktivieren zu müssen. Es liegt im Rahmen der Erfindung, dass die Abspeicherung der aufgezeichneten Referenzlinie 30 auch an eine zentrale Recheneinheit 37 übertragen werden kann. Dies hätte insbesondere den Vorteil, dass die Generierung neuer, die Kontur der generierten Referenzlinie 30 nachbildenden, Fahrtrouten 29 in zentralen Computereinheiten 37 erfolgen kann, sodass die hierfür erforderliche Rechenkapazität nicht auf der landwirtschaftlichen Arbeitsmaschine 1 installiert werden muss, sodass die auf dem Mähdrescher 2 angeordnete Steuer- und Auswerteinheit 12 kostengünstig ausführbar ist.

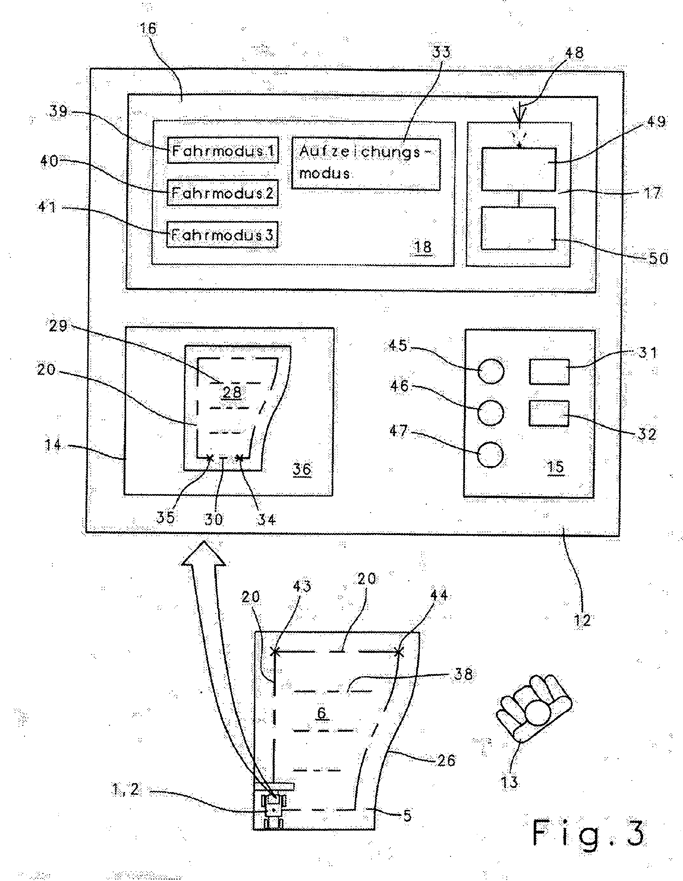

Figur 3 ist das Prinzip der Fahrtroutengenerierung sowie die dafür erforderliche Struktur des Programmiermoduls 16 an Hand einer schematischen Darstellung näher erläutert, Im unteren Bereich der Figur 3 sind zunächst das zu bearbeitende Territorium 5 und die als Mähdrescher 2 ausgeführte landwirtschaftliche Arbeitsmaschine 1 sowie die abzuarbeitenden, verschieden strukturierten Fahrtrouten 20, dargestellt. Der obere Teil der Figur 3 zeigt eine vergrößerte Darstellung der Steuer- und Auswerteinheit 12 mit schematischer Detaildarstellung der Datengenerierung. Wie bereits beschrieben, umfasst die Steuer- und Auswerteinheit 12 eine Anzeigeeinheit 14, eine Eingabeeinheit 15 und ein Programmiermodul 16. Weiter sind in dem Programmiermodul 16 zumindest ein Routenplanungssystemmodul 17 und das erfindungsgemäße Navigationsmodul 18 angelegt. Die sich aus Figur 3 ergebende strenge ung zwischen Navigationsmodul 18 und Routenplanungssystemmodul 17 wurde nur aus Gründen der besseren Darstellbarkeit gewählt Es liegt im Rahmen der Erfindung, dass diese in einem einzigen Modul in dem Programmiermodul 16 zusammengefasst sind.

In dem Navigationsmodul 18 sind in erfindungsgemäßer Weise Automatikfahrmodi 39-41 und zumindest ein Aufzeichnungsmodus 33 zur Aufzeichnung einer Referenzlinie 30 hinterlegt Die Automatikfahrmodi 39-41 umfassen in dem dargestellten Ausführungsbeispiel einen ersten Automatikfahrmodus "Abfahren einer von einem Anfangspunkt und einem Endpunkt begrenzten geraden Strecke" 39, einen zweiten Automatikfahrmodus "Abfahren einer von einem Anfangspunkt und einem Endpunkt
begrenzten Konturstrecke" 40 und einen weiteren Automatikfahrmodus "Konturfahrt ohne Begrenzung durch einen Anfangspunkt und einen Endpunkt" 41. Bereits die Begrifflichkeit der Automatikfahrmodi 39-41 weist auf deren Struktur hin, nämlich die Automatikfahrmodi 39 und 40 führen das landwirtschaftliche Fahrzeug 1 automatisch auf Fahrtrouten 20, die durch vordefinierte Anfangspunkte 43 und Endpunkte 44 bestimmt sind, wobei die Fahrtroute 20 entweder als gerade Strecke oder gekrümmte Konturstrecke ausgebildet ist. Demgegenüber arbeitet der weitere Automatikfahrmodus 41 in der Weise, dass zunächst eine erste, beispielsweise die Außenkontur 26 des zu bearbeitenden Territoriums 5 nachbildende äußere Fahrtroute 20 von der landwirtschaftlichen Arbeitsmaschine 1 abgefahren wird, wobei dieser äußeren, Fahrtroute 20 in Abhängigkeit davon, ob deren Geodaten vorliegen oder nicht automatisch oder vom Betreiber 13 gesteuert gefolgt wird. Im dargestellten Ausführungsbeispiel kann der jeweilige Automatikfahrmodus 39-41 durch Vorwahlschalter 45-47 ausgewählt werden. Wie bereits beschrieben, kann der ebenfalls in das Navigationsmodul 18 integrierte Aufzeichnungsmodus 33 beispielsweise über Start- und Stopptasten 31, 32 oder durch Definition des Anfangs- und Endpunktes 34, 35 der Referenzlinie 30 auf einem Touchscreenmonitor 36 aktiviert und beendet werden. Der Einsatz eines Touchscreenmonitors 36 hat zudem den Vorteil, dass die Selektion einer Referenzlinie 30 dann zu jedem beliebigen Zeitpunkt vorgenommen werden kann, wenn auf dem Touchscreenmonitor 36 eine Vielzahl von bereits abgearbeiteten und/oder noch abzuarbeitenden Fahrtrouten 20, 29 angezeigt werden. In einer vorteilhaften Ausgestaltung der Erfindung sind die verschiedenen Automatikfahrmodi 39-41 so mit dem Aufzeichnungsmodus 33 verknüpft, dass einerseits die erfindungsgemäße Aufzeichnung einer Referenzlinie 30 in irgendeinem der verfügbaren Automatikfahrmodi 39-41 oder andererseits unabhängig davon, ob einer der verfügbaren Automatikfahrmodi 39-41 aktiviert ist erfolgen kann. Auf diese Weise wird es möglich, dass der Aufzeichnungsmodus 33 in einem ersten Automatikfahrmodus 39-41 gestartete werden kann und eine Referenzlinie 30 generiert, die dann zur Erstellung von Fahrtrouten 29 für einen anderen als den während der Aufzeichnung aktiven Automatikfahrmodus 39-41 herangezogen wird. Beispielsweise kann der Aufzeichnungsmodus 33 während die landwirtschaftliche Arbeitsmaschine 1 in dem Automatikfahrmodus "Konturfahrt ohne Begrenzung durch einen Anfangspunkt und einen Endpunkt" 41 betrieben wird gestartet werden und eine Referenzlinie 30 aufzeichnen, die dann zur Generierung von Fahrtrouten 29 für den Automatikfahrmodus "Abfahren einer von einem Anfangspunkt und einem Endpunkt begrenzten geraden Strecke" 39 herangezogen wird. Indem während der Konturfahrt in der bereits beschriebenen Weise ein Anfangspunkt 34 und ein Endpunkt 35 zur Aufzeichnung der Referenzlinie 30 definiert werden, generiert der Aufzeichnungsmodus 33 eine zwischen diesen Punkten 34, 35 liegende gerade Strecke als Referenzlinie 30.

Im dargestellten Ausführungsbeispiel nach Figur 3 würde die landwirtschaftliche Arbeitsmaschine 1 beispielsweise in dem dritten Automatikfahrmodus 41 zur Abarbeitung der die Außenkontur 26 des zu bearbeitenden Territoriums 5 definierenden Fahrtroute 20 betrieben. Es liegt im Rahmen der Erfindung, dass die landwirtschaftliche Arbeitsmaschine 1 aber auch in einem der anderen Automatikfahrmodi 39, 40 betrieben werden kann oder dass während des Betriebes in dem einen Automatikfahrmodus 39-41 in einen anderen Automatikfahrmodus 39-41 gewechselt werden kann. Sobald der Mähdrescher 2 die untenseitige, gerade Wegstrecke erreicht hat, aktiviert der Betreiber 13 des Mähdreschers 2 die Starttaste 31 zur Definition des Anfangspunktes 34 der Aufzeichnung. Am Ende dieser geraden Wegstrecke wird dann die Stopptaste 32 betätigt sodass die Aufzeichnung durch Definition eines Endpunktes 35 abgebrochen wird. Die zwischen dem Anfangs- und Endpunkt 34, 35 liegende Wegstrecke bildet die Referenzlinie 30, die im einfachsten Fall in der Steuer- und Auswerteinheit 12 abgespeichert wird und die die Eingangsinformation 48 für das erfindungsgemäße Routenplanungssystem 17 bildet. Das Routenplanungssystem 17 umfasst einen sogenannten Beetfunktionsmodul 49 in welchem auf Basis der generierten Referenzlinie 30 ein noch zu bearbeitendes Restterritorium 28 mit Fahrtrouten 29 ausgefüllt und in einer sogenannten Beetfunktion 50 hinterlegt wird. Die Abarbeitung der nunmehr gespeicherten Beetfunktion 50 kann entweder durch gezieltes Abrufen oder dadurch erfolgen, dass der Betreiber 13 die landwirtschaftliche Arbeitsmaschine 1 parallel zur Lage der generierten Referenzlinie 30 in den Bestand 6 lenkt und das Programmiermodul 16 selbsttätig erkennt, dass nunmehr die aufgezeichnete Beetfunktion 50 abzuarbeiten ist. Es liegt im Rahmen der Erfindung, dass in dem Programmiermodul 16 eine Vielzahl von Beetfunktionen 50 hinterlegt sein können und jede Beetfunktion 50 unterschiedlich strukturierte Fahrtrouten 20, 29 umfasst. Die unterschiedliche Struktur der Fahrtrouten 20, 29 kann dabei sowohl die Gestalt, wie etwa gerade oder gekrümmte Linien, als auch die Lage im zu bearbeitenden Territorium 5, wie die Nord-Süd-Ost-West-Anordnung umfassen.

Es liegt im Rahmen des Könnens eines Fachmanns das beschriebene Routenplanungssystem 17 in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: landwirtschaftliche Arbeitsmaschine
- 2: Mähdrescher
- 3: Getreideschneidwerk
- 4: Vorsatzgerät
- 5: Territorium
- 6: Bestand
- 7: GPS-Ortungsvorrichtung
- 8: GPS-Satellit
- 9: Positionssignal
- 10 1: Positionssignal Fahrerkabine
- 12: Steuer- und Auswerteinheit
- 13: Betreiber
- 14: Anzeigeeinheit
- 15: Eingabeeinheit
- 16: Programmiermodul
- 17: Routenplanungssystem
- 18: Navigationsmodul
- 19: Lenksystem
- 20: Fahrtroute
- 21: Fahrtroutensignal
- 22: Lenksignal
- 23: Ortungsvorrichtung
- 24: Laserscanner
- 25: Bestandskante
- 26: Außenkontur
- 27: Vorgewende
- 28: Restterritorium
- 29: Fahrtroute
- 30: Referenzlinie
- 31: Starttaste
- 32: Starttaste
- 33: Aufzeichnungsmodus
- 34: Anfangspunkt
- 35: Endpunkt
- 36: Touchscreenmonitor
- 37: zentrale Recheneinheit
38
- 39: Automatikfahrmodus
- 40: Automatikfahrmodus
- 41: Automatikfahrmodus
42
- 43: Anfangspunkt
- 44: Endpunkt
- 45: Vorwahlschalter
- 46: Vorwahlschalter
- 47: Vorwahlschalter
- 48: Eingangsinformation
- 49: Beetfunktionsmodul
- 50: Beetfunktion

- X: Arbeitsbreite

## Patentansprüche

1. Routenplanungssystem für landwirtschaftliche Arbeitsmaschinen, wobei der landwirtschaftlichen Arbeitsmaschine eine definierte Arbeitsbreite zur Generierung von Fahrtrouten in einem Territorium zugeordnet ist und die Generierung der Fahrtrouten in einem Navigationsmodul erfolgt,
**dadurch gekennzeichnet,**
**dass** das Navigationsmodul (18) ein oder mehrere Automatikfahrmodi (39-41) und zumindest einen Aufzeichnungsmodus (33) umfasst und wobei der oder die Automatikfahrmodi (39-41) und der zumindest eine Aufzeichnungsmodus (33) unabhängig voneinander aktivierbar sind.

2. Routenplanungssystem für landwirtschaftliche Arbeitsmaschinen nach Anspruch 1, **dadurch gekennzeichnet,**
**dass** in einem Automatikfahrmodus (39-41) die Aufzeichnung einer definierten Fahrstrecke (20) erfolgt und diese definierte Fahrstrecke (20) die Referenzlinie (30) einer oder mehrerer nachfolgend abzuarbeitenden Fahrstrecken (29) bildet.

3. Routenplanungssystem für landwirtschaftliche Arbeitsmaschinen nach Anspruch 2,
**dadurch gekennzeichnet,**
**dass** die von der Referenzlinie (30) definierten, nachfolgend abzuarbeitenden Fahrstrecken (29) in einem Beetfunktionsmodul (49) als Beetfunktion (50) zusammengefasst sind.

4. Routenplanungssystem für landwirtschaftliche Arbeitsmaschinen nach einem der vorhergehenden Ansprüche,
**dadurch gekennzeichnet,**
**dass** die definierte Fahrstrecke (20, 30) durch Selektion eines die definierte Fahrstrecke (20, 30) begrenzenden Anfangspunktes (34) und Endpunktes (35) erfolgt.

5. Routenplanungssystem für landwirtschaftliche Arbeitsmaschinen nach einem der vorhergehenden Ansprüche,
**dadurch gekennzeichnet,**
**dass** der Anfangspunkt (34) und der Endpunkt (35) durch Generierung eines Start- und Stoppsignals (31, 32) in einer Steuer- und Auswerteinheit (12) selektiert werden.

6. Routenplanungssystem für landwirtschaftliche Arbeitsmaschinen nach Anspruch 5,
**dadurch gekennzeichnet,**
**dass** die Steuer- und Auswerteinheit (12) eine als Touchscreenmonitor (36) ausgebildete Anzeigeeinheit (14) umfasst und dass der Anfangspunkt (34) und der Endpunkt (35) durch Selektion auf dem Touchscreenmonitor (36) bestimmt werden.

7. Routenplanungssystem für landwirtschaftliche Arbeitsmaschinen nach einem der vorhergehenden Ansprüche,
**dadurch gekennzeichnet,**
**dass** die Beetfunktion (50) die Aufteilung eines zu bearbeitenden Territoriums (5, 28) in eine Vielzahl von Fahrstrecken (20, 29) umfasst.

8. Routenplanungssystem für landwirtschaftliche Arbeitsmaschinen nach einem der vorhergehenden Ansprüche,
**dadurch gekennzeichnet,**
**dass** die Automatikfahrmodi (39-41) das Abfahren einer von einem Anfangspunkt (43) und einem Endpunkt (44) begrenzten geraden Strecke, das Abfahren einer von einem Anfangspunkt (43) und einem Endpunkt (44) begrenzten Konturstrecke und das Konturfahren ohne Begrenzung durch einen Anfangspunkt (43) und einen Endpunkt (44) oder eine Kombination aus zumindest diesen Automatikfahrmodi (39-41) umfassen.

9. Routenplanungssystem für landwirtschaftliche Arbeitsmaschinen nach einem der vorhergehenden Ansprüche,
**dadurch gekennzeichnet,**
**dass** der jeweilige Automatikfahrmodus (39-41) frei wählbar ist und zwischen verschiedenen Automatikfahrmodi (39-41) umgeschaltet werden kann.

10. Routenplanungssystem für landwirtschaftliche Arbeitsmaschinen nach einem der vorhergehenden Ansprüche,
**dadurch gekennzeichnet,**
**dass** in dem einen Automatikfahrmodus (39-41) die Aufzeichnung einer definierten Fahrstrecke (20) erfolgt und diese definierte Fahrstrecke (20) die Referenzlinie (30) für die Beetfunktion (50) eines anderen Automatikfahrmodus (39-41) bildet.

## Claims

1. A route planning system (17) for agricultural working machines (1), wherein associated with the agricultural working machine (1) is a defined working width (X) for generating travel routes (20, 29) in a territory (5) and generation of the travel routes (20, 29) is effected in a navigation module (18), wherein the navigation module (18) includes at least one automatic travel mode (39-41) for automatically guiding the agricultural working machine (1) on travel routes (20, 29) and at least one recording mode (33) for recording a reference line (30),
**characterised in that**
the navigation module (18) includes one or more automatic travel modes (39-41) and wherein the automatic travel mode or modes (39-41) and the at least one recording mode (33) are activatable independently of each other.

2. A route planning system for agricultural working machines according to claim 1 **characterised in that** recording of a defined travel path (20) is effected in an automatic travel mode (39-41) and said defined travel path (20) forms the reference line (30) of one or more travel paths (29) to be subsequently processed.

3. A route planning system for agricultural working machines according to claim 2 **characterised in that** the travel paths (29) defined by the reference line (30) and to be subsequently processed are assembled in a crop bed function module (49) as a bed function (50).

4. A route planning system for agricultural working machines according to one of the preceding claims **characterised in that** the defined travel path (20, 30) is effected by selection of a start point (34) and an end point (35) delimiting the defined travel path (20, 30).

5. A route planning system for agricultural working machines according to one of the preceding claims **characterised in that** the start point (34) and the end point (35) are selected by generating a start and stop signal (31, 32) in a control and evaluation unit (12).

6. A route planning system for agricultural working machines according to claim 5 **characterised in that** the control and evaluation unit (12) includes a display unit (14) in the form of a touch screen monitor (36) and the start point and the end point (35) are determined by selection on the touch screen monitor (36).

7. A route planning system for agricultural working machines according to claim 3 **characterised in that** the bed function (50) includes division of a territory (5, 28) to be worked into a plurality of travel paths (20, 29).

8. A route planning system for agricultural working machines according to one of the preceding claims **characterised in that** the automatic travel modes (39-41) include travelling along a straight path delimited by a start point (43) and an end point (44), travelling along a contour path delimited by a start point (43) and an end point (44) and contour travel without limitation by a start point (43) and an end point (44) or a combination of at least said automatic travel modes (39-41).

9. A route planning system for agricultural working machines according to one of the preceding claims **characterised in that** the respective automatic travel mode (39-41) can be freely selected and switching-over can be effected between various automatic travel modes (39-41).

10. A route planning system for agricultural working machines according to one of the preceding claims **characterised in that** recording of a defined travel path (20) is effected in the one automatic travel mode (39-41) and said defined travel path (20) forms the reference line (30) for the bed function (50) of another automatic travel mode (39-41).

## Revendications

1. Système de planification d'itinéraire (17) pour machines agricoles (1), dans lequel une largeur de travail (X) définie est associée à la machine agricole (1), en vue de générer des itinéraires (20, 29) dans un territoire (5), et la génération des itinéraires (20, 29) est réalisée dans un module de navigation (18), le module de navigation (18) comprenant au moins un mode de déplacement automatique (39-41), pour le guidage automatique de la machine agricole (1) sur des itinéraires (20, 29), et au moins un module d'enregistrement (33) destiné à enregistrer une ligne de référence (30),
**caractérisé par le fait que**
le module de navigation (18) comprend un ou plusieurs modes de déplacement automatiques (39-41), et le ou les modes de déplacement automatiques (39-41) et le mode d'enregistrement (33), au nombre d'au moins un, peuvent être activés indépendamment l'un de l'autre.

2. Système de planification d'itinéraire pour machines agricoles selon la revendication 1,
**caractérisé par le fait que**
dans un mode de déplacement automatique (39-41), l'enregistrement d'un itinéraire (20) défini est réalisé, et que cet itinéraire (20) défini constitue la ligne de référence (30) d'un ou plusieurs itinéraires (29) à exécuter ultérieurement.

3. Système de planification d'itinéraire pour machines agricoles selon la revendication 2,
**caractérisé par le fait que**
les itinéraires (29) à exécuter ultérieurement, définis par la ligne de référence (30), sont regroupés en tant que fonction de planche (50) dans un module à fonction de planche (49).

4. Système de planification d'itinéraire pour machines agricoles selon une des revendications précédentes,
**caractérisé par le fait que**
l'itinéraire (20, 30) est défini par sélection d'un point de début (34) et d'un point de fin (35) délimitant l'itinéraire (20, 30) défini.

5. Système de planification d'itinéraire pour machines agricoles selon une des revendications précédentes,
**caractérisé par le fait que**
le point de début (34) et le point de fin (35) sont sélectionnés par génération d'un signal de démarrage et d'arrêt (31, 32) dans une unité de commande et d'exploitation (12).

6. Système de planification d'itinéraire pour machines agricoles selon la revendication 5,
**caractérisé par le fait que**
l'unité de commande et d'exploitation (12) comprend une unité d'affichage (14) réalisée sous forme d'écran tactile (36), et **par le fait que** le point de début (34) et le point de fin (35) sont fixés par sélection sur cet écran tactile (36).

7. Système de planification d'itinéraire pour machines agricoles selon la revendication 3,
**caractérisé par le fait que**
la fonction de planche (50) comprend la division d'un territoire (5, 28) à travailler, en une pluralité d'itinéraires (20, 29).

8. Système de planification d'itinéraire pour machines agricoles selon une des revendications précédentes,
**caractérisé par le fait que**
les modes de déplacement automatiques (39-41) comprennent l'exécution d'un parcours rectiligne, délimité par un point de début (43) et un point de fin (44), l'exécution d'un parcours de contour, délimité par un point de début (43) et un point de fin (44), et l'exécution de contour sans délimitation par un point de début (43) et un point de fin (44), ou une combinaison au moins de ces modes de déplacement automatiques (39-41).

9. Système de planification d'itinéraire pour machines agricoles selon une des revendications précédentes,
**caractérisé par le fait que**
le mode de déplacement automatique (39-41) respectif peut être choisi librement, et qu'il est possible de commuter entre différents modes de déplacement automatiques (39-41).

10. Système de planification d'itinéraire pour machines agricoles selon une des revendications précédentes,
**caractérisé par le fait que**
dans l'un des modes de déplacement automatiques (39-41), l'enregistrement d'un itinéraire (20) défini a lieu, et que cet itinéraire (20) défini constitue la ligne de référence (30) pour la fonction de planche (50) d'un autre mode de déplacement automatique (39-41).
